Europäisches Patentamt

European Patent Office

Office européen des brevets

(19)

(11) Veröffentlichungsnummer: **0 264 697**
B1

# (12) EUROPÄISCHE PATENTSCHRIFT

(45) Veröffentlichungstag der Patentschrift:
27.06.90

(21) Anmeldenummer: 87114461.4

(22) Anmeldetag: 03.10.87

(51) Int. Cl.⁵: **B29C 37/00**, B29C 67/18,
B22D 19/08

(54) Verfahren zur Herstellung eines aus einer geschlitzten Metallhülse und einer Ummantelung bestehenden Bauteils und nach dem Verfahren hergestelltes Bauteil.

(30) Priorität: 16.10.86 DE 3635247

(43) Veröffentlichungstag der Anmeldung:
27.04.88 Patentblatt 88/17

(45) Bekanntmachung des Hinweises auf die Patenterteilung:
27.06.90 Patentblatt 90/26

(84) Benannte Vertragsstaaten:
DE FR GB IT

(56) Entgegenhaltungen:
DE-C- 690 257
US-A- 3 405 214
US-A- 4 065 190

(73) Patentinhaber: INA Wälzlager Schaeffler KG,
Industriestrasse 1-3 Postfach 1220,
D-8522 Herzogenaurach(DE)

(72) Erfinder: Rabe, Jürgen, Dipl.-Ing., Talblick 6,
D-8521 Aurachtal(DE)

(74) Vertreter: Klug, Horst, Dipl.-Ing. (FH), c/o INA Wälzlager
Schaeffler KG Postfach 12 20,
D-8522 Herzogenaurach(DE)

ACTORUM AG

## Beschreibung

Die Erfindung betrifft ein Verfahren zur Herstellung eines Bauteils und ein derart hergestelltes Bauteil, welches aus einer an einer Stelle ihres Umfangs mit einem axial durchgehenden Schlitz versehenen, insbesondere dünnwandigen zylindrischen Metallhülse und einer diese an ihrer äußeren Mantelfläche umgebenden Ummantelung besteht, wobei in einer Vorrichtung, welche einen Kern zur Aufnahme der Metallhülse aufweist, diese mit der Ummantelung umgeben und der Schlitz der Metallhülse wenigstens teilweise derart mit dem Werkstoff der Ummantelung ausgefüllt wird, daß die Begrenzungsflächen des Schlitzes der Metallhülse wenigstens teilweise mit diesem bedeckt sind (DE-A 690 257).

Derartige Bauteile werden für die unterschiedlichsten Anwendungen, z.B. als Gleitlager oder als Reduzierhülse, verwendet und können besonders kostengünstig hergestellt werden, da die Metallhülse spanlos ausgehend von einem Blechband und die Ummantelung z.B. als Spritzgießteil hergestellt werden kann.

Ein bekanntes Verfahren zur Herstellung der genannten Bauteile sieht vor, daß die infolge des Schlitzes federnd radial nachgiebige Metallhülse in eine getrennt hergestellte Ummantelung eingepreßt wird. Es hat sich gezeigt, daß bei nach diesem Verfahren hergestellten Bauteilen der Bohrungsdurchmesser der Metallhülse nach dem Einpressen in derart breiten Grenzen streut, daß diese Bauteile erhöhten Anforderungen an ihre Präzision, wie sie z.B. im Fall von Gleitlagern bestehen, nicht gewachsen sind. Außerdem ist die Metallhülse sowohl in axialer als auch in Umfangsrichtung nicht in der Ummantelung fixiert.

Auch bei dem aus der DE-A 690 257 bekannten Verfahren der eingangs genannten Art ist eine Streuung des Bohrungsdurchmessers der Metallhülse in breiten Grenzen noch möglich.

Zur Steigerung der Präzision der Bauteile hat man zwar bereits vorgeschlagen, ungeschlitzte, z.B. durch Ziehen oder spanabhebend hergestellte Metallhülsen zu verwenden, jedoch ist diese Maßnahme mit einer erheblichen Steigerung der Herstellungskosten verbunden. Um eine Lagesicherung der Metallhülse in der Ummantelung zu schaffen, hat man im Zusammenhang mit ungeschlitzten Metallhülsen weiter vorgeschlagen, diese an ihrer äußeren Mantelfläche mit spanend oder z.B. durch Rändeln hergestellten Vorsprüngen zu versehen. Auch die Herstellung der Vorsrünge erhöht die Fertigungskosten ganz erheblich, ganz abgesehen davon, daß diese Maßnahme nur bei relativ dickwandigen Metallhülsen praktikabel ist.

Der Erfindung liegt die Aufgabe zugrunde, ein Verfahren der eingangs genannten Art und ein nach dem Verfahren hergestelltes Bauteil zu schaffen, die es trotz der Verwendung einer geschlitzten Metallhülse gestatten, das Bauteil mit einem eng tolerierten Bohrungsdurchmesser herzustellen, wobei auf einfache Weise eine Lagesicherung der Metallhülse in der Ummantelung ermöglicht wird.

Diese Aufgabe wird bei dem Verfahren erfindungsgemäß dadurch gelöst, daß die Metallhülse mit einem Innendurchmesser hergestellt wird, der höchstens dem Innendurchmesser des fertigen Bauteils entspricht, und beim Aufsetzen auf den Kern um ein Maß elastisch aufgeweitet wird, das größer als dasjenige Maß ist, um das der in den Schlitz eingebrachte Werkstoff der Ummantelung beim Erkalten schrumpft.

Das Verfahren, nach welchem die Ummantelung gebildet wird, hängt unter anderem von deren Werkstoff ab. So kommen unter anderem Spritz- oder Druckgießen, Pressen, Sintern und Tauchen in Frage.

In welcher Weise der Schlitz der Metallhülse mit Werkstoff der Ummantelung ausgefüllt wird, hängt vom jeweiligen Bauteil ab. So kann im Falle einer als geschlossener Ring ausgebildeten Ummantelung der Schlitz durchaus vollständig mit deren Werkstoff ausgefüllt werden, während im Falle einer Ummantelung, die im Bereich des Schlitzes der Metallhülse selbst geschlitzt ist, der Schlitz er Metallhülse derart teilweise mit dem Werkstoff der Ummantelung ausgefüllt wird, daß dieser nur vorsprungartig an den Begrenzungsflächen des Schlitzes anliegt.

Vorausgesetzt die Metallhülse wird beim Aufsetzen auf den Kern um ein Maß elastisch aufgeweitet, daß größer ist als dasjenige Maß, um das der in ihren Schlitz eingebrachte Werkstoff der Ummantelung nach dem Abnehmen des Bauteils von dem Kern beim Erkalten schrumpft, wird die Metallhülse durch den in ihren Schlitz eingreifenden Werkstoff in einem elastisch aufgeweiteten Zustand gehalten. Wenn außerdem das Maß der Aufweitung der Metallhülse abhängig vom jeweiligen Bauteil unter Berücksichtigung des Schrumpfungsverhaltens des jeweils verwendeten Werkstoffs der Ummantelung in geeigneter Größe gewählt wird, stellt sich ein reproduzierbarer definierter Bohrungsdurchmesser des Bauteils ein, der sich innerhalb von Toleranzgrenzen bewegt, die ohne das erfindungsgemäße Verfahren nur bei Verwendung ungeschlitzter Metallhülsen realisierbar sind. Dabei ist im Falle der Verwendung einer Hülse, deren Innendurchmesser exakt dem Innendurchmesser des fertigen Bauteils entspricht, der Grenzfall gegeben, daß die durch den in den Schlitz eingreifenden Werkstoff der Ummantelung bewirkte elastische Aufweitung der Hülse gerade den Wert null annimmt. Außerdem ist durch den in den Schlitz der Metallhülse eingreifenden Werkstoff der Ummantelung eine Verdrehsicherung zwischen den beiden Teilen gegeben, ohne daß besondere Maßnahmen erforderlich wären.

Bei einem nach dem erfindungsgemäßen Verfahren hergestellten Bauteil wird nach einer Variante der Erfindung (Anspruch 2) eine Lagesicherung zwischen der Metallhülse und der Ummantelung auch in axialer Richtung dadurch erzielt, daß wenigstens eine der Begrenzungskanten des Schlitzes der Metallhülse im Abstand von ihren Enden wenigstens einen teilweise von dem Werkstoff der Ummantelung umgebenen Vorsprung oder eine teilweise mit diesem ausgefüllte Ausnehmung aufweist.

Nach einer weiteren Ausführungsform der Erfindung (Anspruch 3) ist vorgesehen, daß der Verlauf der Begrenzungskanten einander derart entspricht, daß einem an der einen Begrenzungskante vorgesehenen Vorsprung gegenüberliegend eine entsprechende Ausnehmung an der anderen Begrenzungskante vorgesehen ist. Hierdurch wird erreicht, daß beim Abschneiden des Rohlings für die Metallhülse von einem Blechband bei Verwendung eines Schneidwerkzeugs, dessen Kontur dem Verlauf der Begrenzungskanten entspricht, mit einem Schneidvorgang zwei Begrenzungskanten hergestellt werden können.

Eine letzte Ausführung der Erfindung (Anspruch 4) sieht vor, daß die Begrenzungskanten geradlinig verlaufen und an einander gegenüberliegenden Stellen Ausnehmungen aufweisen. Auch durch diese Maßnahme können die Begrenzungskanten auf einfache Weise erzeugt werden, nämlich indem beim Herstellen der Rohlinge für die Metallhülse ausgehend von einem Blechband dieses im Bereich der Schnittstelle zunächst gelocht und anschließend mit einem einfachen geraden Schneidwerkzeug getrennt wird.

Ausführungsbeispiele der Erfindung sind in den Figuren dargestellt. Es zeigen:

Fig. 1 einen Längsschnitt entsprechend der Linie I-I in Fig. 2 durch ein nach dem erfindungsgemäßen Verfahren hergestelltes Bauteil,

Fig. 2 einen Querschnitt entsprechend der Linie II-II in Fig. 1,

Fig. 3 einen Längsschnitt entsprechend der Linie III-III in Fig. 4 durch eine Spritzform zur Durchführung des erfindungsgemäßen Verfahrens,

Fig. 4 einen Querschnitt entsprechend der Linie IV-IV in Fig. 3,

Fig. 5 einen Längsschnitt entsprechend Linie V-V in Fig. 6 durch ein nach dem erfindungsgemäßen Verfahren hergestelltes Bauteil und

Fig. 6 einen Querschnitt entsprechend Linie VI-VI in Fig. 5.

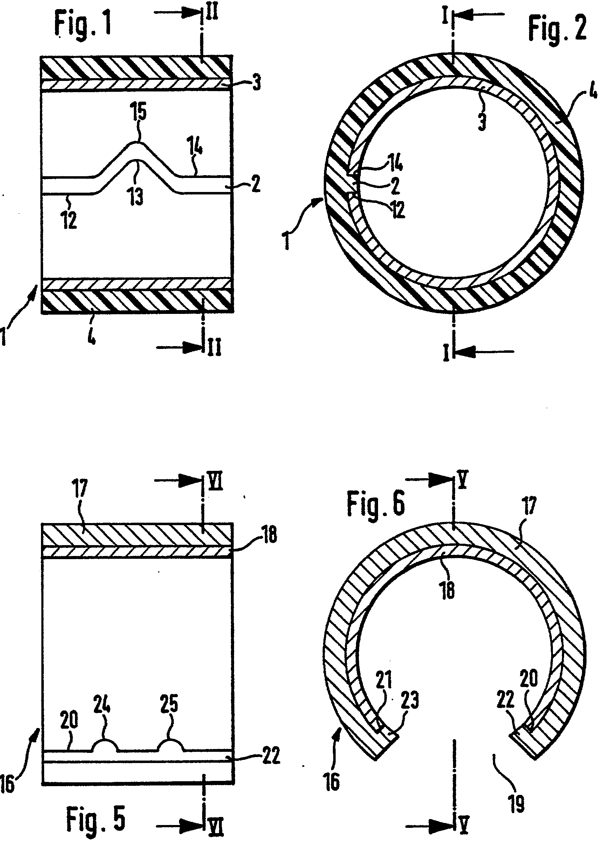

Die Fig. 1 und 2 zeigen ein nach dem erfindungsgemäßen Verfahren hergestelltes Bauteil 1, welches aus einer an einer Stelle ihres Umfangs mit einem axial durchgehenden Schlitz 2 versehenen dünnwandigen Metallhülse 3 und einer diese an ihrer äußeren Mantelfläche vollständig umgebenden ringförmigen Ummantelung 4 aus einem polymeren Werkstoff besteht.

Wie aus den Fig. 3 und 4 ersichtlich ist, wird das Bauteil 1 in einer Spritzform 5 hergestellt, die aus den axial trennbaren Formteilen 6 und 7 besteht und einem dem Bauteil 1 entsprechenden Formhohlraum einschließt, wobei das Formteil 6 einen Kern 8 besitzt, auf dem vor dem Schließen und dem Füllen der Spritzform 5 mit polymerem Werkstoff die Metallhülse 3 aufgesetzt wird, die dann beim Einfüllen von polymerem Werkstoff in die Form 5 mit der Ummantelung 4 versehen wird. Zum Einfüllen des polymeren Werkstoffs weist die Formhälfte 7 einen Angußkanal 9 auf, ausgehend von dem der polymere Werkstoff über drei in der Stirnfläche des Kernes 8 und der Formhälfte 7 in gleichen Winkelabständen angebrachte Kanäle 10, von denen in Fig. 3 nur einer sichtbar ist, in den eigentlichen Formhohlraum gelangen kann. Zum Trennen des fertigen Bauteils von der Form 5 ist in dem Formteil 6 ein Auswerfer 11 längsverschieblich angebracht.

Beim Herstellen des Bauteils 1 wird nach der Erfindung so verfahren, daß zunächst die Metallhülse 3 mit einem Innendurchmesser hergestellt wird, der höchstens dem Innendurchmesser des fertigen Bauteils 1 entspricht. Die Metallhülse 3 wird dann auf den Kern 8, dessen Außendurchmesser größer als der Innendurchmesser der Metallhülse 3 ist, aufgesetzt und dabei elastisch aufgeweitet. Nach dem Schließen der Spritzform 5 wird diese zur Bildung der Ummantelung 4 vollständig mit polymerem Werkstoff ausgefüllt, wobei, wie aus den Fig. 2 bis 4 ersichtlich ist, auch der Schlitz 2 der Metallhülse 5 vollständig mit dem polymeren Werkstoff ausgefüllt wird. Das Bauteil 1 wird nach dem Öffnen der Spritzform 5 schließlich aus dieser ausgeworfen.

Das Maß, um das die Metallhülse 3 elastisch aufgeweitet wurde ist größer als dasjenige Maß, um das der in dem Schlitz 2 der Metallhülse 3 eingebrachte polymere Werkstoff nach dem Auswerfen des Bauteils 1 aus der Spritzform 5 beim Abkühlen schrumpft. Die Metallhülse 3 wird somit von dem in ihrem Schlitz 2 befindlichen polymeren Werkstoff in einem elastisch aufgeweiteten Zustand gehalten und weist einen reproduzierbaren definierten Innendurchmesser auf, der innerhalb von Toleranzgrenzen liegt, die ohne das erfindungsgemäße Verfahren nur bei Verwendung ungeschlitzter Metallhülse realisierbar sind.

Das genaue Maß des Innendurchmessers der Metallhülse 3 wird durch geeignete Wahl des Maßes der elastischen Aufweitung unter Berücksichtigung des Schwindungsverhaltens des verwendeten polymeren Werkstoffs bestimmt.

Da der polymere Werkstoff der Ummantelung 4 den Schlitz der Metallhülse 3 vollständig ausfüllt ist zwischen den beiden Teilen eine Verdrehsicherung gegeben. Da außerdem wie aus den Fig. 1 und 2 ersichtlich die Begrenzungskante 12 des Schlitzes 2 im Abstand von ihren Enden einen Vorsprung 13 aufweist, sind die beiden Teile außerdem in ihrer axialen Lage zueinander fixiert. Die andere Begrenzungskante 14 des Schlitzes 2 weist einen dem der Begrenzungskante 12 entsprechenden Verlauf auf, das heißt sie weist eine dem Vorsprung 13 entsprechende und diesen gegenüberliegend angeordnete Ausnehmung 15 auf. Durch diese Ausbildung der Begrenzungskanten 12 und 14 können beim Abschneiden des Rohlings für die Metallhülse 3 von einem Metallband bei Verwendung eines Schneidwerkzeugs mit geeigneter Kontur mit einem Schneidvorgang zwei Begrenzungskanten hergestellt werden.

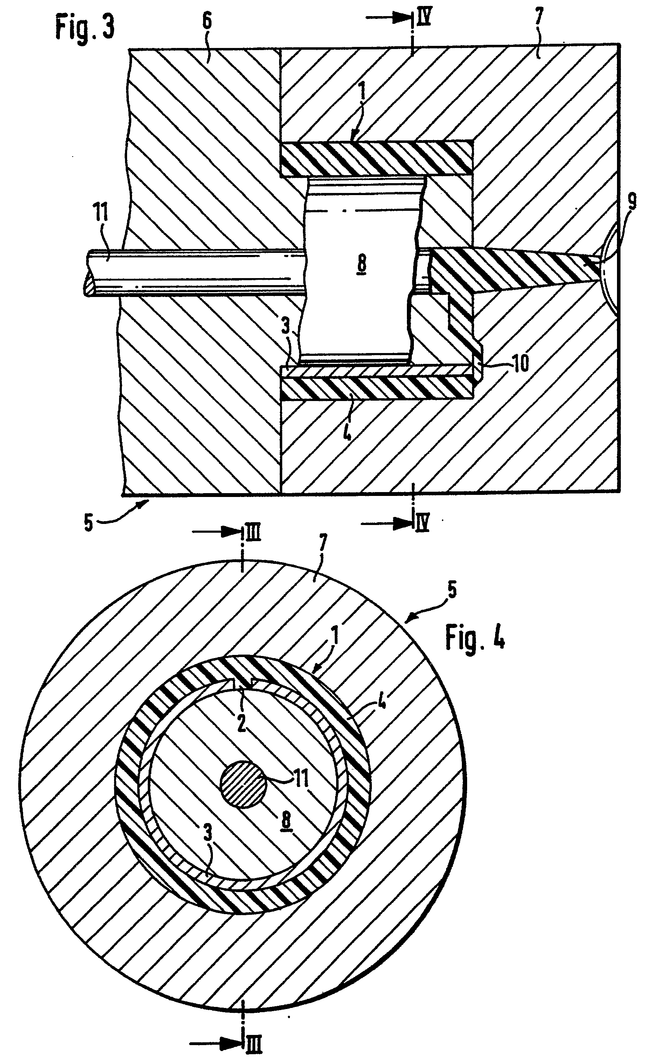

Das in den Fig. 5 und 6 dargestellte, nach dem erfindungsgemäßen Verfahren hergestellte Bauteil 16 unterscheidet sich von dem zuvor beschriebenen dadurch, daß die Ummantelung 17 um Bereich des Schlitzes 19 der Metallhülse 18 ebenfalls einen Schlitz aufweist und aus einem metallischen Werkstoff besteht. Dies hat zur Folge, daß der Schlitz 19 der Metallhülse 18 nur teilweise und derart mit metallischen Werkstoff der Ummantelung 17 ausgefüllt ist, daß diese in den Schlitz 19 der Metallhülse 18 nur entlang dessen Begrenzungskanten 20 und 21 eingreift und mit leistenartigen, radial nach innen gerichteten Vorsprüngen 22 und 23 an den Begrenzungsflächen des Schlitzes 19 der Metallhülse 18 anliegt. Die Metallhülse 18 wird somit mittels der Vorsprünge 22 und 23 in einem elastisch aufgeweiteten Zustand gehalten und weist unter den obengenannten Voraussetzungen einen reproduzierbaren definierten Innendurchmesser auf, der innerhalb äußerst geringer Toleranzgrenzen schwankt.

Zusätzlich zu der durch die Vorsprünge 22 und 23 gebildeten Verdrehsicherung sind die Metallhülse 18 und die Ummantelung 17 dadurch in axialer Richtung zueinander fixiert, daß die Begrenzungskanten des Schlitzes 19 der Metallhülse 18 jeweils zwei einander gegenüberliegende etwa halbkreisförmige Ausnehmungen 24 und 25 aufweisen, in die, wie in Fig. 5 für die Begrenzungskante 20 gezeigt ist, der metallische Werkstoff der Ummantelung 17 vorsprungartig eingreift. Durch diese Ausbildung der Begrenzungskanten 20 und 21 wird außerdem die Herstellung des Rohlings für die Metallhülse 18 aus einem Metallband vereinfacht. Es kann dabei so vorgegangen werden, daß das Metallband zunächst im Bereich der Schnittstelle mit einem Stempel mit kreisförmigen Querschnitt gelocht und anschließend mit einem einfachen geraden Schneidwerkzeug getrennt wird.

Die Anwendbarkeit des in Anspruch 1 definierten erfindungsgemäßen Verfahrens beschränkt sich keineswegs auf die in den Ausführungsbeispielen gezeigten Bauteile. Es können vielmehr Bauteile mit Ummantelungen von beliebiger Gestalt hergestellt werden. Auch kann der Werkstoff der Ummantelung in anderer als in den Ausführungsbeispielen gezeigter Weise in den Schlitz der Metallhülse eingreifen.

## Patentansprüche

1. Verfahren zur Herstellung eines Bauteils (1, 16), welches aus einer Stelle ihres Umfangs mit einem axial durchgehenden Schlitz (2, 19) versehenen, insbesondere dünnwandigen zylindrischen Metallhülse (3, 18) mit einer diese an ihrer äußeren Mantelfläche umgebenden Ummantelung (4, 17) besteht, wobei in einer Vorrichtung (5), welche einen Kern (8) zur Aufnahme der Metallhülse (3, 18) aufweist, diese mit der Ummantelung (4, 17) umgeben und der Schlitz (2, 19) der Metallhülse (3, 18) wenigstens teilweise derart mit dem Werkstoff der Ummantelung (4, 17) ausgefüllt wird, daß die Begrenzungsflächen des Schlitzes (2, 19) der Metallhülse (3, 18) wenigstens teilweise mit diesem bedeckt sind, dadurch gekennzeichnet, daß die Metallhülse (3, 18) mit einem Innendurchmesser hergestellt wird, der höchstens dem Innendurchmesser des fertigen Bauteils (1, 16) entspricht, und beim Aufsetzen auf den Kern (8) um ein Maß elastisch aufgeweitet wird, das größer als dasjenige Maß ist, um das der in den Schlitz eingebrachte Werkstoff der Ummantelung beim Erkalten schrumpft.

2. Bauteil, welches nach dem Verfahren nach Anspruch 1 hergestellt ist, dadurch gekennzeichnet, daß wenigstens eine der Begrenzungskanten (12, 14, 20, 21) des Schlitzes (2, 19) der Metallhülse (3, 18) im Abstand von ihren Enden wenigstens einen teilweise von dem Werkstoff der Ummantelung (4, 17) umgebenen Vorsprung (13) oder eine teilweise mit deren Werkstoff ausgefüllte Ausnehmung (15, 24, 25) aufweist.

3. Bauteil nach Anspruch 2, dadurch gekennzeichnet, daß der Verlauf der Begrenzungskanten (12, 14) einander derart entspricht, daß einem an der einen Begrenzungskante (12) vorgesehenen Vorsprung (13) gegenüberliegend eine entsprechende Ausnehmung (15) an der anderen Begrenzungskante (14) vorgesehen ist.

4. Bauteil nach Anspruch 2, dadurch gekennzeichnet, daß die Begrenzungskanten (20, 21) geradlinig verlaufen und an einander gegenüberliegenden Stellen Ausnehmungen (24, 25) aufweisen.

## Claims

1. Process for producing a component (1, 16) which consists of a cylindrical, especially, thin-walled, metal sleeve (3, 18) provided with an axially continuous slit (2, 19), with a sheathing (4, 17) surrounding the outer peripheral surface of the sleeve, wherein the metal sleeve (3, 18) is surrounded with the sheathing (4, 17) in a device (5) which has a core for reception of the metal sleeve (3, 18) and the slit (2, 19) of the metal sleeve (3, 18) is so filled at least partially with the material of the sheathing (4, 17) that the bounding surfaces of the slit (2, 19) of the metal sleeve (3, 18) are at least partially covered with the material, characterized in that the metal sleeve (3, 18) is produced with an inner diameter which corresponds at the most to the inner diameter of the finished component (1, 16) and is elastically enlarged when fitted on the core (5) to a degree which is greater than the amount by which the material of the sheathing introduced into the slit shrinks on cooling.

2. Component produced according to the method according to claim 1, characterized in that at least one of the bounding edges (12, 14, 20, 21) of the slit (2, 19) of the metal sleeve (3, 18) has, spaced from its ends, at least one projection (13) partially surrounded by the material of the sheathing (4, 17) or a recess (15, 24, 25) partially filled with the material.

3. Component according to claim 2, characterized in that the courses of the bounding edges (12, 14) so correspond to one another that a projection (13) provided on the one bounding edge (12) is provided opposite a corresponding recess (15) in the other bounding edge (14).

4. Component according to claim 2, characterized in that the bounding edges (20, 21) are straight and have recesses (24, 25) at locations opposite to one another.

## Revendications

1. Procédé de fabrication d'un élément (1, 16) qui comprend un manchon métallique (3, 18) cylindrique, en particulier à paroi mince, comportant en un emplacement de sa périphérie une fente (2, 19) axialement continue, et un revêtement (4, 17) qui entoure le manchon sur sa surface périphérique extérieure, tandis que, dans un dispositif (5) qui comporte un noyau (8) pour la réception du manchon métallique (3, 18), celui-ci est entouré du revêtement (4, 17) et la fente (2, 19) du manchon métallique (3, 18) est au moins partiellement remplie de la matière du revêtement (4, 17) de telle façon que les surfaces de délimitation de la fente (2, 19) du manchon métallique (3, 18) en sont couvertes au moins partiellement, caractérisé en ce qu'on donne au manchon métallique (3, 18) un diamètre intérieur au maximum égal au diamètre intérieur de l'élément fini (1, 16) et, lorsqu'on le place sur le noyau (8), il est élargi élastiquement dans une proportion supérieure à la proportion dont la matière du revêtement introduite dans la fente se contracte lors du refroidissement.

2. Elément fabriqué par le procédé selon la revendication 1, caractérisé en ce que l'un au moins des bords de délimitation (12, 14, 20, 21) de la fente (2, 19) du manchon métallique (3, 18) comporte à distance de ses extrémités auch moins une saillie (13) entourée partiellement par la matière du revêtement (4, 17) ou un évidement (15, 24, 25) rempli partiellement de la matière du revêtement.

3. Elément selon la revendication 2, caractérisé en ce que les tracés des bords de délimitation (12, 14) se correspondent de telle façon qu'on prévoit en regard d'une saillie (13) prévue sur l'un des bords de délimitation (12) un évidement correspondant (15) sur l'autre bord de délimitation (14).

4. Elément selon la revendication 2, caractérisé en ce que les bords de délimitation (20, 21) ont un tracé rectiligne et comportent des évidements (24, 25) en des emplacements qui se font face.

Fig. 1

Fig. 2

Fig. 6

Fig. 5

**Fig. 3**

**Fig. 4**